# EUROPEAN PATENT APPLICATION

(11) **EP 1 768 050 A1**
(43) Date of publication of application: **28.03.2007**
(21) Application number: 04746785.7
(22) Date of filing: 01.07.2004
(51) Int. Cl.: G06K 19/06, G06K 19/07, G06K 7/10, H04N 9/64

(54) **DEVICE, METHOD, AND PROGRAM FOR CREATING A TWO-DIMENSIONAL BARCODE IMAGE, SYSTEM AND METHOD FOR INFORMATION TRANSMISSION, AND DEVICE, METHOD, AND PROGRAM FOR DECODING THE TWO-DIMENSIONAL BARCODE**

(71) Applicant: Fujitsu Ltd., Kawasaki-shi, Kanagawa 211-8588 (JP)
(72) Inventor: FUTAMURA, Kazuhiro; c/o FUJITSU LIMITED,, Kawasaki-shi, Kanagawa; 2118588 (JP); MIURA, Hiroshi; c/o FUJITSU LIMITED,, Kawasaki-shi, Kanagawa; 2118588 (JP)
(74) Representative: Sunderland, James Harry
(86) International application number: PCT/JP2004/009316
(87) International publication number: WO 2006/003698

(57) **Abstract**

A two-dimensional bar code image generation apparatus for generating a color image according to a two-dimensional bar code comprises a two-dimensional bar code encoding section 11 that encodes the input information into a two-dimensional bar code, an up-sampling section 12 that up-samples the two-dimensional bar code, a luminance signal generating section 13 that applies a band limit to the output of the up-sampling section and outputs the band-limited output as luminance signal and a blue color difference signal generating section 14 and a red color difference signal generating section 15 that output the quantity of variance between any two adjacent pieces of information respectively as a blue color difference signal and as a red color difference signal in the output of the up-sampling section.

## Description

### Technical Field

This invention relates to a two-dimensional bar code image generating apparatus, a two-dimensional bar code image generating method and a two-dimensional bar code image generating program for generating a two-dimensional bar code image as well as to a two-dimensional bar code decoding apparatus, a two-dimensional bar code decoding method and a two-dimensional bar code decoding program for decoding a two-dimensional bar code generated by and transmitted from such an apparatus by means of such a method and/or a program. The present invention also relates to an information transmission system and an information transmission method for generating and transmitting a two-dimensional bar code image and acquiring information by reading a transmitted two-dimensional bar code image.

### Background Art

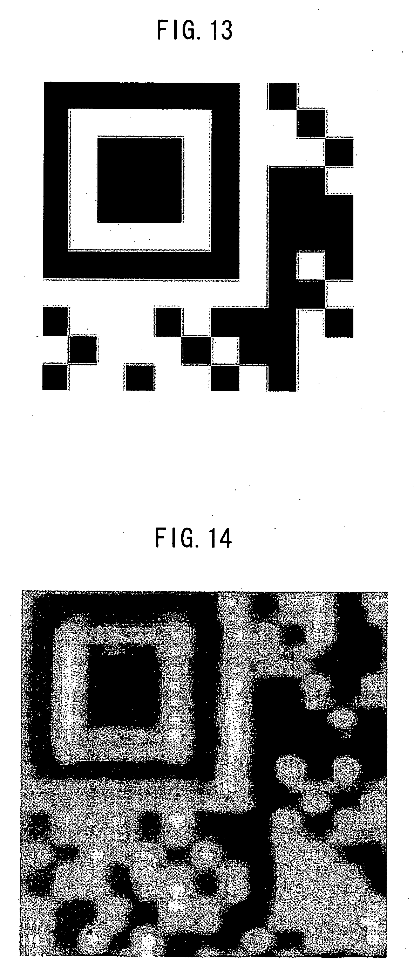

One-dimensional bar codes and two-dimensional bar codes are being used for commercial purposes and other purposes. Such bar codes are mostly printed in black and white patterns and utilized as means for transmitting information. A two-dimensional bar code is a matrix of black and white squares and the arrangement of solid squares represents information. FIG. 13 shows such a two-dimensional bar code as example.

Some portable information terminals that have been marketed in recent years are equipped with a functional feature of recognizing two-dimensional bar codes. Such a portable information terminal picks up an image of a printed two-dimensional bar code by means of an image pickup element, processes the image and decodes the bar code to acquire the original information.

Systems for displaying data as a black and white pattern on the display unit of a computer and reading the pattern have been proposed (see, inter alia, Patent Document 1).
Patent Document 1: Jpn. Pat. Appln. Laid-Open Publication No. 6-208450, pp. 2-3, FIG. 1.

However, while a clear image of a two-dimensional bar code can be acquired with a high resolution when the bar code is printed on a glossy paper and picked up by a portable information terminal from a short distance, a reading error can arise when a two-dimensional bar code is displayed on a display apparatus with a low resolution and picked up by a portable information terminal. FIG 14 shows how a two-dimensional bar code is degraded on a display apparatus. The two-dimensional bar code of FIG 14 is obtained when the two-dimensional bar code of FIG. 13 is transmitted by way of a transmission path with a limited bandwidth or displayed on a low resolution display apparatus.

A two-dimensional bar code of black and white squares shows binary information and hence has an infinite spatial frequency bandwidth. Therefore, it is necessary to provide the transmission path to the display apparatus with an appropriate low pass filter that matches the Nyquist frequency and make the display apparatus have a sufficient resolution. Aliasing can occur in the spatial frequency range to give rise to errors when the bandwidth of the transmission path to the display apparatus is small and/or the resolution of the display apparatus is low.

### Disclosure of the invention

### Problems to be Solved by the Invention

In view of the above-identified problem, it is therefore an object of the present invention to provide an information transmission system and an information transmission method that can accurately transmit the information of a two-dimensional bar code when a transmission path of a small bandwidth is used. Another object of the present invention is to provide a two-dimensional bar code image generating apparatus, a two-dimensional bar code image generating method and a two-dimensional bar code image generating program that can generate a two-dimensional bar code image having a high degree of tolerance to the limitations of the transmission path. A further object of the present invention is to provide a two-dimensional bar code decoding apparatus, a two-dimensional bar code decoding method and a two-dimensional bar code decoding program for picking up and decoding an image of a two-dimensional bar code.

### Means for Solving the Problem

According to the present invention, there is provided a two-dimensional bar code image generating apparatus for generating a color image according to a two-dimensional bar code, the apparatus comprising: a two-dimensional bar code encoding section that encodes the input information into a two-dimensional bar code; an up-sampling section that up-samples the two-dimensional bar code; a luminance signal generating section that applies a band limit to the output of the up-sampling section and outputs the band-limited output as luminance signal; and a color difference signal generating section that outputs the quantity of variance between any two adjacent pieces of information as color difference signal in the output of the up-sampling section.

In an embodiment of a two-dimensional bar code generating apparatus according to the present invention, the color difference signal generating section includes a blue color difference signal generating section and a red color difference signal generating section.

Preferably, in a two-dimensional bar code image generation apparatus according to the present invention, when each dot having the value before the up-sampling is defined as an information dot and the dot located at the middle point of any two adjacent information dots is defined as a center dot, while the dot located between an information dot and a center dot is defined as an interval dot in the output of the up-sampling section; the luminance signal generating section limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

With the above-described arrangement, it is possible to transmit high quality information by using a color image of a two-dimensional bar code because a color difference signal is used as information for supplementing the luminance signal.

Preferably, in a two-dimensional bar code image generation apparatus according to the present invention, when the value of each dot is expressed by a value between 0 and 1 and each dot having the value before the up-sampling is defined as an information dot, while the dot located at the middle point of any two adjacent information dots and the dot located between an information dot and a center dot are defined respectively as a center dot and an interval dot and a blue color difference signal and a red color difference signal are selected as the color difference signal, in the output of the up-sampling section; the color difference signal generating section defines the value of either of the blue color difference signal and the red color difference signal at each center dot to be equal to 1 when the values of the adjacent information dots differ from each other but equal to 0 when the values of the adjacent information dots agree with each other and the value of the other of the blue color difference signal and the red color difference signal at the center dot to be equal to 0 when the values of the adjacent information dots differ from each other but equal to 1 when the values of the adjacent information dots agree with each other, and the values of the blue color difference signal and red color difference signal at the information dot to be equal to 0, while it selects the value obtained by interpolating the value of the closest information dot and the value of the center dot as the value of the blue color difference signal and the red color difference signal of the interval dot.

Preferably, in a two-dimensional bar code image generation apparatus as defined above, the luminance signal generating section limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

With the above-described arrangement, it is possible to transmit a color image of a two-dimensional bar code as color television signal by using luminance signals, blue color difference signals and red color difference signals.

In another aspect of the present invention, there is provided a two-dimensional bar code, decoding apparatus for picking up a color image containing a two-dimensional bar code and decoding the information contained in the two-dimensional bar code, the apparatus comprising: a camera that picks up a color image containing the two-dimensional bar code; and an image processing section that acquires the luminance signals and the color difference signals from the color image and also acquires the quantity of variance between any two adjacent pieces of information from the color difference signal so as to decode the two-dimensional bar code from the luminance signals, corrected by using the quantities of variances.

With the above-described arrangement, it is possible to reduce the error rate when reading a two-dimensional bar code by using a color difference signal as information for supplementing the luminance signal.

Preferably, a two-dimensional bar code decoding apparatus according to the present invention further comprises a display section that displays the information acquired as a result of decoding.

Preferably, the color difference signal is a blue color difference signal and a red color difference signal; and the image processing section selects, within the range corresponding to the unit of information of the two-dimensional bar code, the average value of the luminance signals, that of the blue color difference signals and that of the red color difference signals respectively as average luminance signal, average blue color difference signal and average red color difference signal and acquires the quantity of variance between any two adjacent pieces of information from the average color difference signal so as to decode the two-dimensional bar code from the average luminance signal corrected by using the quantities of variances.

Preferably, a two-dimensional bar code decoding apparatus according to present invention is arranged in a portable information terminal. A two-dimensional bar code decoding apparatus according to the present invention can easily be arranged in most portable information terminals comprising a camera as those that have been marked in recent years. For the purpose of the present invention, portable information terminals include portable telephone sets, notebook type personal computers, PDAs (personal digital assistants), digital cameras and digital video cameras.

In still another aspect of the present invention, there is provided an information transmission system for generating a color image on the basis of a two-dimensional bar code and transmitting it at the transmitter side and reading the two-dimensional bar code by shooting the color image displayed at the receiver side, the system comprising: a two-dimensional bar code image generation apparatus that includes: a two-dimensional bar code encoding section that encodes input information into a two-dimensional bar code; an up-sampling section that up-samples the two-dimensional bar code; a luminance signal generating section that applies a band limit to the output of the up-sampling section and outputs the band-limited output as luminance signal; and a color difference signal generating section that outputs the quantity of variance between any two adjacent pieces of information as color difference signal in the output of the up-sampling section; a display apparatus that displays the output of the two-dimensional bar code image generation apparatus; and a two-dimensional bar code decoding apparatus including: a camera that picks up the color image being displayed on the display apparatus and containing the two-dimensional bar code; and an image processing section that acquires the luminance signals and the color difference signals from the color image and also acquires the quantity of variance between any two adjacent pieces of information from the color difference signal so as to decode the two-dimensional bar code from the luminance signals, corrected by using the quantities of variances.

In still another aspect of the present invention, there is provided a two-dimensional bar code image generation method for generating a color image according to a two-dimensional bar code, the method comprising: a two-dimensional bar code encoding step that encodes the input information into a two-dimensional bar code; an up-sampling step that up-samples the two-dimensional bar code; a luminance signal generating step that applies a band limit to the output of the up-sampling step and outputs the band-limited output as luminance signal; and a color difference signal generating step that outputs the quantity of variance between any two adjacent pieces of information as color difference signal in the output of the up-sampling step.

Preferably, in a two-dimensional bar code image generation method according to the present invention, when each dot having the value before the up-sampling is defined as an information dot and the dot located at the middle point of any two adjacent information dots is defined as a center dot, while the dot located between an information dot and a center dot is defined as an interval dot in the output of the up-sampling step; the luminance signal generating step limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

Preferably, when the value of each dot is expressed by a value between 0 and 1 and each dot having the value before the up-sampling is defined as an information dot, while the dot located at the middle point of any two adjacent information dots and the dot located between an information dot and a center dot are defined respectively as a center dot and an interval dot and a blue color difference signal and a red color difference signal are selected as the color difference signal, in the output of the up-sampling step; the color difference signal generating step defines the value of either of the blue color difference signal and the red color difference signal at each center dot to be equal to 1 when the values of the adjacent information dots differ from each other but equal to 0 when the values of the adjacent information dots agree with each other and the value of the other of the blue color difference signal and the red color difference signal at the center dot to be equal to 0 when the values of the adjacent information dots differ from each other but equal to 1 when the values of the adjacent information dots agree with each other, and the values of the blue color difference signal and red color difference signal at the information dot to be equal to 0, while it selects the value obtained by interpolating the value of the closest information dot and the value of the center dot as the value of the blue color difference signal and the red color difference signal of the interval dot.

Preferably, the luminance signal generating step limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

In still another aspect of the present invention, there is provided a two-dimensional bar code decoding method for picking up a color image containing a two-dimensional bar code and decoding the information contained in the two-dimensional bar code, the method comprising: an image pickup step that picks up a color image containing the two-dimensional bar code; and an image processing step that acquires the luminance signals and the color difference signals from the color image and also acquires the quantity of variance between any two adjacent pieces of information from the color difference signal so as to decode the two-dimensional bar code from the luminance signals, connected by using the quantities of variances.

Preferably, the color difference signal is a blue color difference signal and a red color difference signal; and the image processing step selects, within the range corresponding to the unit of information of the two-dimensional bar code, the average value of the luminance signals, that of the blue color difference signals and that of the red color difference signals respectively as average luminance signal, average blue color difference signal and average red color difference signal and acquires the quantity, of variance between any two adjacent pieces of information from the average color difference signal so as to decode the two-dimensional bar code from the average luminance signal corrected by using the quantities of variances.

In still another aspect of the present invention, there is provided an information transmission method for generating a color image on the basis of a two-dimensional bar code and transmitting it at the transmission side and reading out the two-dimensional bar code by picking up a color image being displayed at the reaction side, the method comprising: a two-dimensional bar code generating step that generates a color two-dimensional bar code image to be transmitted, the step including: a two-dimensional bar code encoding step that encodes the input information into a two-dimensional bar code; an up-sampling step that up-samples the two-dimensional bar code; a luminance signal generating step that applies a band limit to the output of the up-sampling step and outputs the band-limited output as luminance signal; and a color difference signal generating step that outputs the quantity of variance between any two adjacent pieces of information as color difference signal in the output of the up-sampling step; a display step that receives and displays the transmitted two-dimensional bar code image, and a two-dimensional bar code decoding step including: an image pickup step that picks up the two-dimensional bar code image; and an image processing step that acquires the luminance signals and the color difference signals from the color image and also acquires the quantity of variance between any two adjacent pieces of information from the color difference signal so as to decode the two-dimensional bar code from the luminance signals, corrected by using the quantities of variances.

In still another aspect of the present invention, there is provided a two-dimensional bar code image generation program for causing a computer to execute a two-dimensional bar code image generation method for generating a color image according to a two-dimensional bar code, the method comprising: a two-dimensional bar code encoding step that encodes the input information into a two-dimensional bar code; an up-sampling step that up-samples the two-dimensional bar code; a luminance signal generating step that applies a band limit to the output of the up-sampling step and outputs the band-limited output as luminance signal; and a color difference signal generating step that outputs the quantity of variance between any two adjacent pieces of information as color difference signal in the output of the up-sampling step.

Preferably, when each dot having the value before the up-sampling is defined as an information dot and the dot located at the middle point of any two adjacent information dots is defined as a center dot, while the dot located between an information dot and a center dot is defined as an interval dot in the output of the up-sampling step; the luminance signal generating step limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

Preferably, when the value of each dot is expressed by a value between 0 and 1 and each dot having the value before the up-sampling is defined as an information dot, while the dot located at the middle point of any two adjacent information dots and the dot located between an information dot and a center dot are defined respectively as a center dot and an interval dot and a blue color difference signal and a red color difference signal are selected as the color difference signal, in the output of the up-sampling step; the color difference signal generating step defines the value of either of the blue color difference signal and the red color difference signal at each center dot to be equal to 1 when the values of the adjacent information dots differ from each other but equal to 0 when the values of the adjacent information dots agree with each other and the value of the other of the blue color difference signal and the red color difference signal at the center dot to be equal to 0 when the values of the adjacent information dots differ from each other but equal to 1 when the values of the adjacent information dots agree with each other, while it selects the value obtained by interpolating the value of the closest information dot and the value of the center dot as the value of the blue color difference signal and the red color difference signal of the interval dot.

In a further aspect of the present invention, there is provided a two-dimensional bar code decoding program for causing a computer to execute a two-dimensional bar code decoding method for picking up an image of a two-dimensional bar code and decoding the information contained in the two-dimensional bar code, the method comprising: an image pickup step that picks up a color image containing the two-dimensional bar code; and an image processing step that acquires the luminance signals and the color difference signals from the color image and also acquires the quantity of variance between any two adjacent pieces of information from the color difference signal so as to decode the two-dimensional bar code from the luminance signals, corrected by using the quantities of variances.

Preferably, the color difference signal is a blue color difference signal and a red color difference signal; and the image processing step selects, within the range corresponding to the unit of information of the two-dimensional bar code, the average value of the luminance signals, that of the blue color difference signals and that of the red color difference signals respectively as average luminance signal, average blue color difference signal and average red color difference signal and acquires the quantity of variance between any two adjacent pieces of information from the average color difference signal so as to decode the two-dimensional bar code from the average luminance signal corrected by using the quantities of variances.

For the purpose of the present invention, it is to store the above-described programs in a computer readable recording medium. Computer readable recording mediums that can be used for the purpose of the present invention include portable storage mediums such as CD-ROMs, flexible disks, DVDs, magneto-optical disks and IC cards, databases adapted to hold computer programs, other computers, the databases of such computers and transmission mediums on communication lines.

### Brief Description of the Drawings

FIG. 1 is a schematic block diagram of an example of information transmission system according to an embodiment of the present invention, showing the configuration thereof;
FiG 2 is a schematic block diagram of an example of the two-dimensional bar code image generation apparatus according to the embodiment, showing the configuration thereof;
FIG 3 is a flowchart of the operation of the two-dimensional bar code image generation apparatus according to the embodiment;
FIGS. 4(a) to 4(c) are schematic illustrations of an example of up-sampling;
FIG 5 is a flowchart of the operation of the luminance signal generating section according to the embodiment;
FIGS. 6(a) to 6(c) are schematic illustrations of a transmission luminance signal Y, shown as an example;
FIG. 7 is a flowchart of the operation of the blue color difference signal generating section according to the embodiment;
FIGS. 8(a) to 8(d) are schematic illustrations of a transmission blue color difference signal Cb, shown as an example;
FIG. 9 is a flowchart of the operation of the red color difference signal generating section according to the embodiment;
FIGS. 10(a) to 10(d) are schematic illustrations of a transmission red color difference signal Cr, shown as an example;
FIG 11 is a schematic block diagram of the portable information terminal according to the embodiment, showing the configuration thereof;
FIG 12 is a flowchart of the two-dimensional bar code decoding operation of the image processing section according to the embodiment;
FIG 13 is a schematic illustration of a two-dimensional bar code, shown as an example; and
FIG. 14 is a schematic illustration of degradation of a two-dimensional bar code at a display apparatus.

### Best Mode for Carrying Out the Invention

Now, the present invention will be described in greater detail by referring to the accompanying drawings that illustrate preferred embodiments of the invention.

Firstly, an embodiment of information transmission system according to the present invention will be described below in terms of generating a color image of a two-dimensional bar code for the information to be transmitted, displaying it on a display apparatus by way of television broadcasting, picking up the displayed color image by means of a portable information terminal and decoding the two-dimensional bar code to obtain the information.

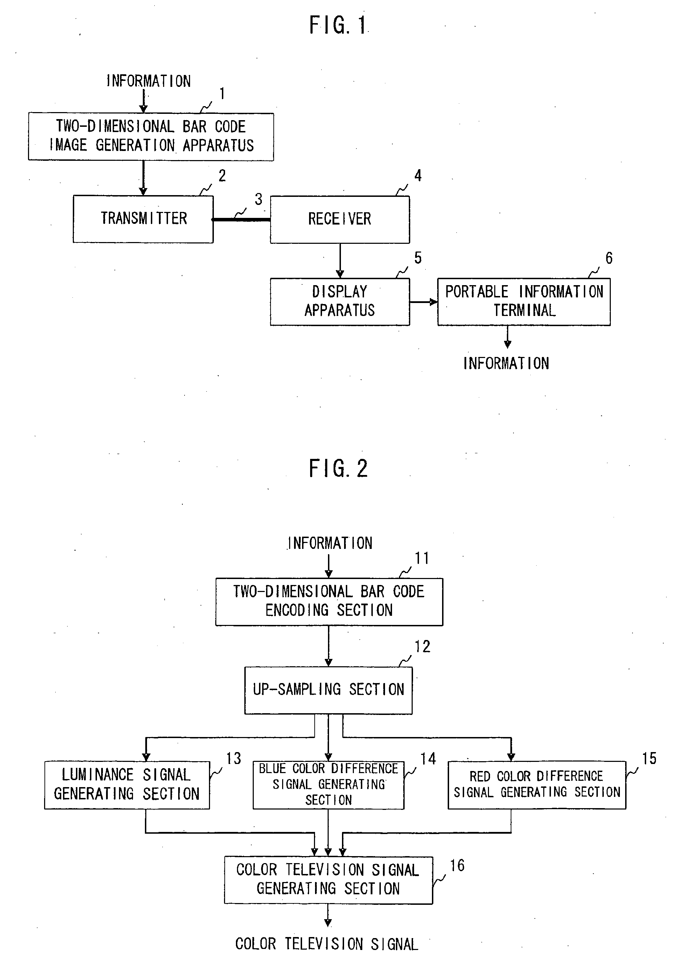

To begin with, the information transmission system will be described. FIG 1 is a schematic block diagram of an example of information transmission system according to the embodiment, showing the configuration thereof. The information transmission system of this embodiment comprises a two-dimensional bar code image generation apparatus 1, a transmitter 2, a transmission path 3, a receiver 4, a display apparatus 5 and a portable information terminal 6.

The two-dimensional bar code image generation apparatus 1 encodes the input information as two-dimensional bar code, transforms it into a color television signal and outputs it to the transmitter 2. The transmitter 2 modulates the input color television signal and outputs it to the transmission path 3 as radio signal. The receiver 4 obtains the color television signal by demodulating the radio signal received from the transmission path 3 and outputs it to the display apparatus 5. The display apparatus 5 displays the input color television signal as an image that includes a two-dimensional bar code. The portable information terminal 6 is provided with a camera, which shoots the image that includes the two-dimensional bar code and is being displayed on the display apparatus 5. The portable information terminal 6 then decodes the two-dimensional bar code and outputs the original information. Thus, the portable information terminal 6 is a two-dimensional bar code decoding apparatus according to present invention.

Now, the transmission side of the system, or the two-dimensional bar code image generation apparatus 1, will be described below. FIG. 2 is a schematic block diagram of the two-dimensional bar code image generation apparatus of this embodiment, showing the configuration thereof. The two-dimensional bar code image generation apparatus 1 of this embodiment comprises a two-dimensional bar code encoding section 11, an up-sampling section 12, a luminance signal generating section 13, a blue color difference signal generating section 14, a red color difference signal generating section 15 and a color television signal generating section 16.

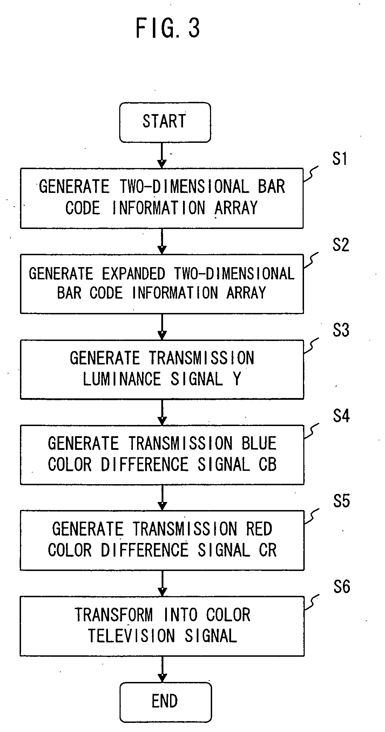

FIG 3 is a flowchart of the operation of the two-dimensional bar code image generation apparatus of this embodiment. Referring to FIG 3, the two-dimensional bar code encoding section 11 encodes the input information according to the rules of two-dimensional bar codes and generates a two-dimensional bar code information array (S1). The two-dimensional bar code information array is expressed by binary luminance values including a luminance value of 0 (black) and a luminance value of 1 (white). Then, the up-sampling section 12 up-samples the two-dimensional bar code information array by inserting a predetermined number of void dots between two adjacent groups of dots of the two-dimensional bar code information array to generate an expanded two-dimensional bar code information array (S2). Each dot having either of the values of the two-dimensional bar code information array is referred to as information dot out of the expanded two-dimensional bar code information array hereinafter. Of the void dots inserted by up-sampling, the one arranged at the middle of the gap separating any two adjacent groups of dots is referred to as center dot and all the other dots are referred to as interval dots hereinafter.

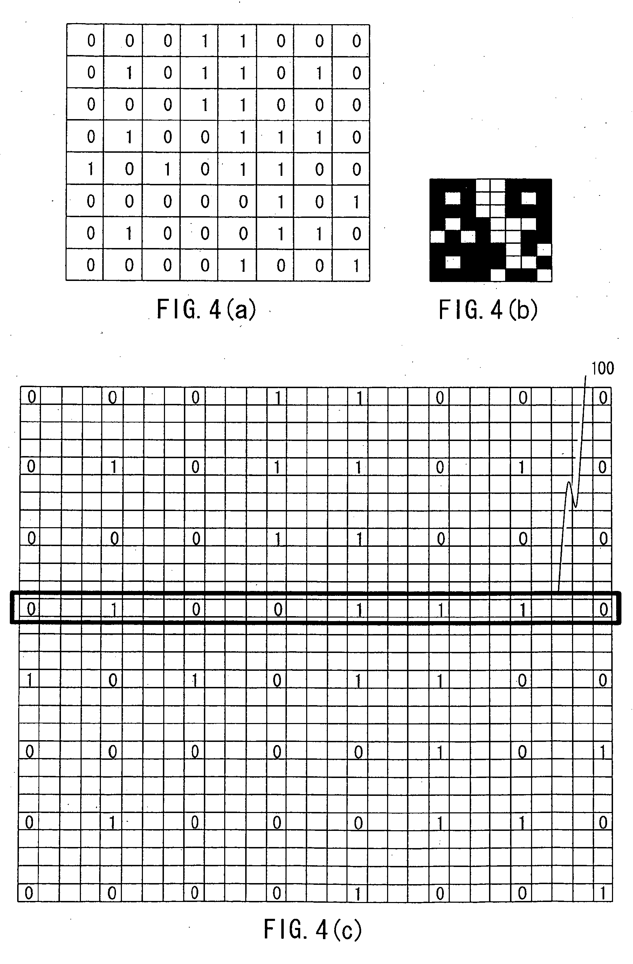

FIGS. 4(a) to 4(c) are schematic illustrations of an example of up-sampling. More specifically, an example of up-sampling of four times is illustrated in FIGS. 4(a) to 4(c). FIG. 4 shows a two-dimensional bar code information array and FIC 4(b) shows an image where a two-dimensional bar code information array is expressed by luminance, while FIG. 4(c) shows an expanded two-dimensional bar code information array generated by up-sampling. The dot row 100 of the expanded two-dimensional bar code information array in FIG 4(c) will mainly be used in the following description.

Then, the luminance signal generating section 13 generates transmission luminance signal Y from the expanded two-dimensional bar code information array (S3). Thereafter, the blue color difference signal generating section 14 generates transmission blue color difference signal Cb from the expanded two-dimensional bar code information array (S4). Subsequently, the red color difference signal generating section 15 generates a transmission red color difference signal Cr from the expanded two-dimensional bar code information array (S5).

Thereafter, the color television signal generating section 16 transforms the transmission luminance signal Y, the transmission blue color difference signal Cb and the transmission red color difference signal Cr into a transmission color television signal and outputs it to the transmission path (S6).

Now, the operation of the luminance signal generating section 13, that of the blue color difference signal generating section 14 and that of the red color difference signal generating section 15 in the two-dimensional bar code image generation apparatus 1 will be described in detail below.

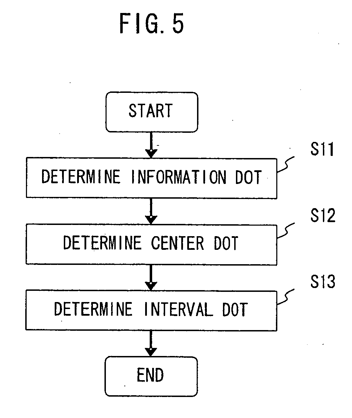

FIG. 5 is a flowchart of the operation of the luminance signal generating section of this embodiment, shown as an example. Referring to FIG. 5, firstly the luminance signal generating section 13 determines the values of the information dots of the expanded two-dimensional bar code information array as those of the information dots of the transmission luminance signal Y (S11). Then, it determines the values of all the center dots of the transmission luminance signal Y to be the middle value (luminance value = 0.5) (S12). Thereafter, it determines the values of the interval dots of the transmission luminance signal Y so as to interpolate the values of the information dots and that of the center dots (S13).

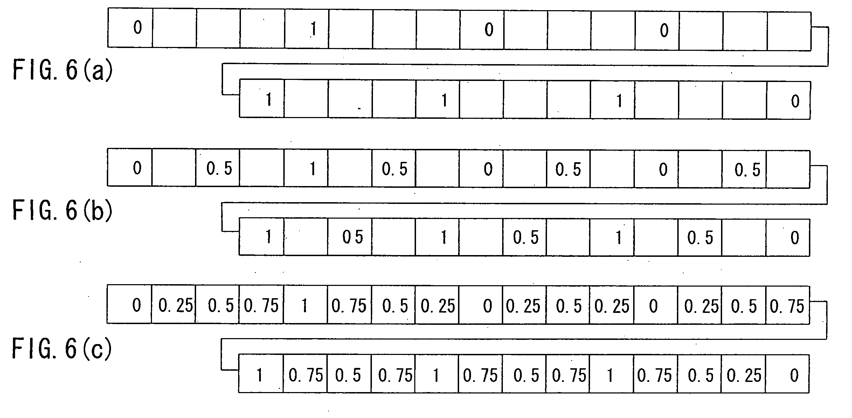

FIGS. 6(a) to 6(c) are schematic illustrations of a transmission luminance signal Y, shown as an example. The transmission luminance signal Y will be described by referring to the above-cited dot row 100. FIG 6(a) shows the transmission luminance signal Y after the processing step S11 and FIG. 6(b) shows the transmission luminance signal Y after the processing step S12, while FIG 6(c) shows the transmission luminance signal Y after the processing step S13.

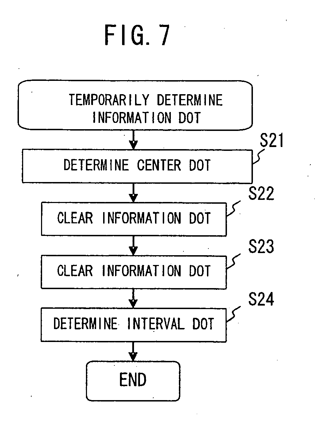

FIG 7 is a flowchart of the operation of the blue color difference signal generating section of this embodiment. Referring to FIG. 7, firstly the blue color difference signal generating section 14 temporarily determines the values of the information dots of the expanded two-dimensional bar code information array as those of the information dots of the transmission blue color difference signal Cb (S21). Then, it determines the absolute value of the difference of any two adjacent information dots of the transmission blue color difference signal Cb as that of the center dot of the transmission blue color difference signal Cb (S22). Thereafter, it reduces the values of the information dots of the transmission blue color difference signal Cb to 0 (S23) and determines the values of the interval dots of the transmission blue color difference signal Cb so as to interpolate the values of the information dots and that of the center dots (S24)..

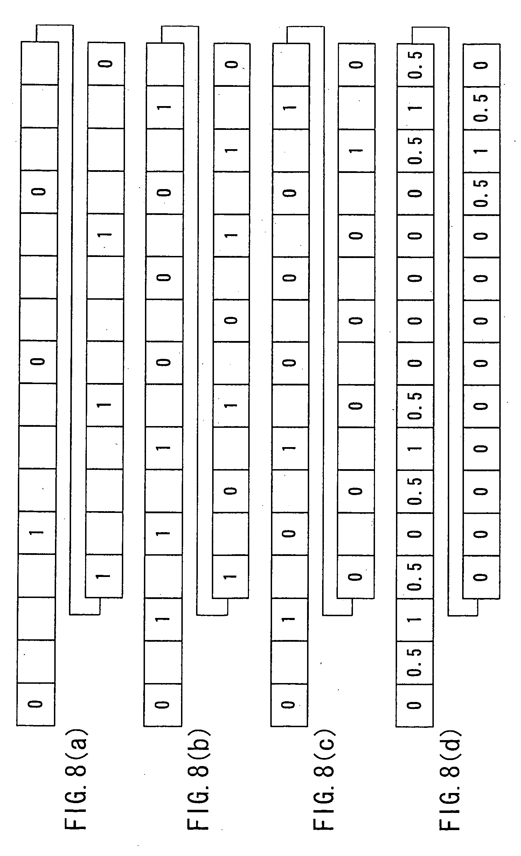

FIGS. 8(a) to 8(d) are schematic illustrations of a transmission blue color difference signal Cb, shown as an example. The transmission blue color difference signal Cb will also be described by referring to the above-cited dot row 100. FIG. 8(a) shows the transmission blue color difference signal Cb after the processing step S21 and FIG 8(b) shows the transmission blue color difference signal Cb after the processing step S22, while FIG 8(c) shows the transmission blue color difference signal Cb after the processing step S23 and FIG. 8(d) shows the transmission blue color difference signal Cb after the processing step S24.

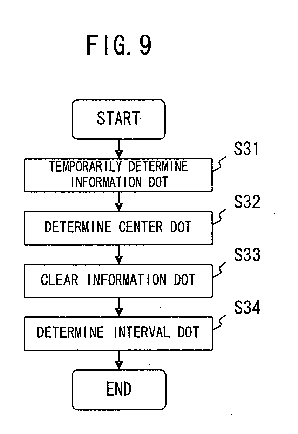

FIG. 9 is a flowchart of the operation of the red color difference signal generating section of this embodiment. Referring to FIG 9, firstly the red color difference signal generating section 15 temporarily determines the values of the information dots of the expanded two-dimensional bar code information array as those of the information dots of the transmission red color difference signal Cr (S31). Then, it determines the absolute value of the product of multiplication obtained by multiplying the sum of any two adjacent information dots by 1/2 after replacing every information dot of the transmission red color difference signal Cr that is equal to 0 by -1 (S32). Thereafter, it reduces the values of the information dots of the transmission red color difference signal Cb to 0 (S33) and determines the values of the interval dots of the transmission red color difference signal Cr so as to interpolate the values of the information dots and that of the center dots (S34).

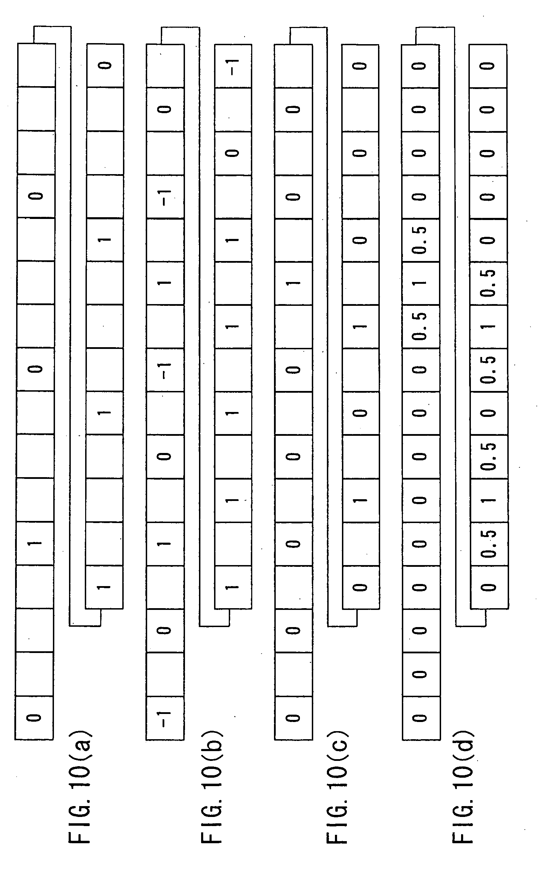

FIGS. 10(a) to 10(d) are schematic illustrations of a transmission red color difference signal Cr, shown as an example. The transmission red color difference signal Cr will also be described by referring to the above-cited dot row 100. FIG. 10(a) shows the transmission red color difference signal Cr after the processing step S31 and FIG 10(b) shows the transmission red color difference signal Cr after the processing step S32, while FIG 10(c) shows the transmission red color difference signal Cr after the processing step S33 and FiG 10(d) shows the transmission red color difference signal Cr after the processing step S34.

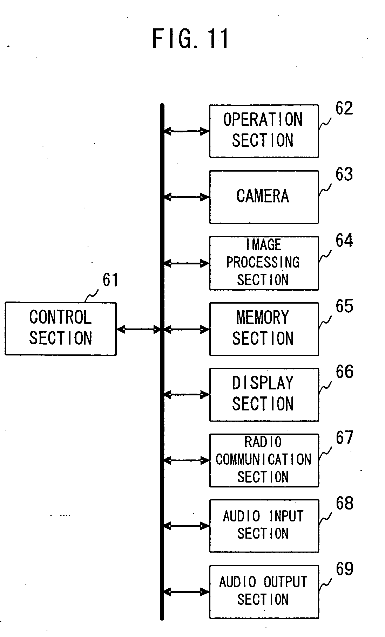

Now, the reception side of the system, or the portable information terminal, will be described below. FIG. 11 is a schematic block diagram of the portable information terminal of this embodiment, showing the configuration thereof. Referring to FIG. 11, the portable information terminal comprises as two-dimensional bar code decoding apparatus a control section 61, an operation section 62, a camera 63, an image processing section 64, a memory section 65, a display section 66, a radio communication section 67, an audio input section 68 and an audio output section 69. While the portable information terminal is a portable telephone set in this embodiment, it may alternatively be a notebook type personal computer, a PDA (personal digital assistant), a digital camera or a digital video camera. The net results will be same.

The control section 61 controls the other components. The operation section 62 receives inputs from the user. The memory section 65 stores the programs that the control section 61 uses and the images that the image processing section 64 uses. The camera 63 performs an image pickup operation according to a corresponding user operation. The image processing section 64 operates mainly for decoding a two-dimensional bar code by using a picked up image. The radio communication section 67 communicates with the base station by means of sounds and data. The audio input section 68 receives the input from the user. The audio output section 69 outputs the received sounds to the user. The display section 66 displays images and data.

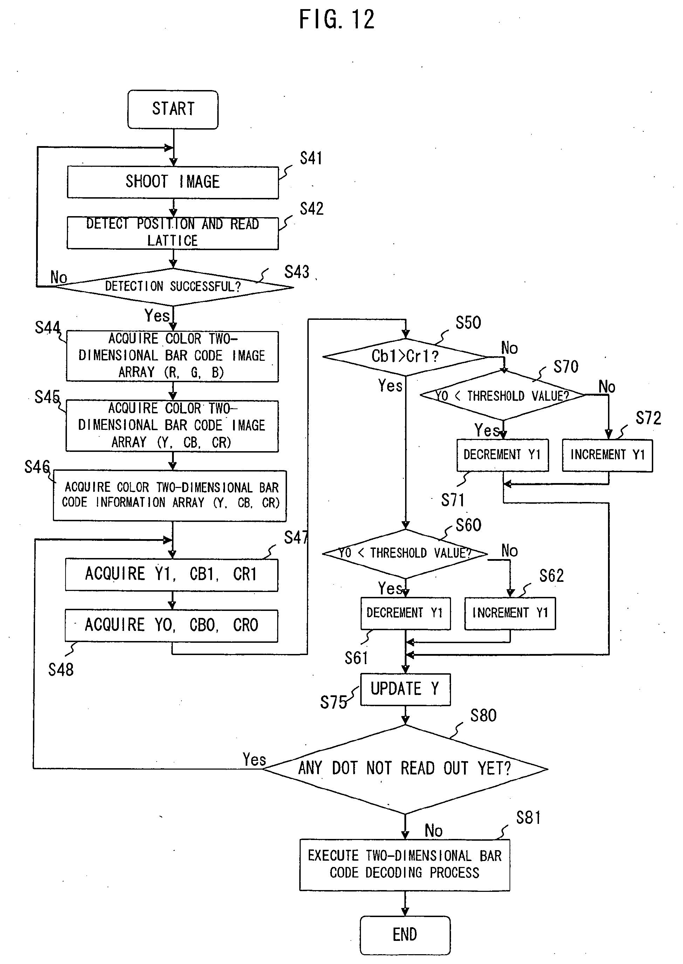

FIG. 12 is a flowchart of the two-dimensional bar code decoding operation of the image processing section according to this embodiment. Referring to FIG. 12, firstly the control section 61 starts an operation of reading a two-dimensional bar code according to the user operation at the operation section 62. Then, the camera 63 picks up a color image that includes the two-dimensional bar code according to the user operation at the operation section 62 (S41). Assume here that the picked up image shows a resolution good for over-sampling of N times of the original two-dimensional bar code and colors are shown by means of (R, G, B).

Thereafter, the image processing section 64 detects the position and the read lattice that operates as unit of dot of the original two-dimensional bar code (S42). Thus, each side of the read lattice is expressed by N pixels. The predetermined markers contained in the two-dimensional bar code and the patterns that operate as pilots are used for the detection of the position.

Then, the image processing section 64 determines if the detection of the position and the read lattice is completed successfully or not (S43). If the detection failed (S43, No), the control section 61 returns to the processing step S41. If, on the other hand, the detection succeeded (S43, Yes), the image processing section 64 acquires the color two-dimensional bar code image array (R, G, B) that are the respective components of the (R, G, B) of the image obtained by cutting out the area of the two-dimensional bar code (S44).

Subsequently, the image processing section 64 converts the (R, G, B) to (Y, Cb, Cr) for the colors of the color two-dimensional bar code image array (R, G, B) and acquires a color two-dimensional bar code image array (Y, Cb, Cr) (S45). Thereafter, the image processing section 64 computationally determines the average value of Y, that of Cb and that of Cr for each read lattice in the color two-dimensional bar code image array (Y, Cb, Cr) and stores them in the memory section 65 as respective color two-dimensional bar code information arrays (Y, Cb, Cr). Thus, each of the color two-dimensional bar code information arrays (Y, Cb, Cr) has a size same as that of the transmitted two-dimensional bar code information array.

Then, the image processing section 64 reads out the information of a dot from each of the color two-dimensional bar code information arrays (Y, Cb, Cr) to obtain Y1, Cb1, Cr1 (S47). Thereafter, the image processing section 64 reads out the information of a dot that is read out from each the color two-dimensional bar code information arrays (Y, Cb, Cr) last time to obtain Y0, Cb0, Cr0 (S48). Then, the image processing section 64 determines if Cb1 > Cr1 or not (S50).

If Cb1 > Cr1 (S50, Yes), the image processing section 64 determines if Y0 < threshold value or not (S60). If Y can take a value within the range from 0 to 1, the threshold value is typically equal to 0.5. If Y0 < threshold value (S60, Yes), the image processing section 64 increments Y1 by a predetermined value (S61) and moves to processing step S75. If, on the other hand, Y0 < threshold value does not hold true (S60, No), the image processing section 64 decrements Y1 by a predetermined value (S62) and moves to processing step S75.

If it is determine in S50 that Cb1 > Cr1 does not hold true (S50, No), the image processing section 64 determines if Y0 < threshold value or not (S70). If Y0 < threshold value (S70, Yes), the image processing section 64 decrements Y1 by a predetermined value (S71) and moves to processing step S75. If, on the other hand, Y0 < threshold value does not hold true (S70, No), the image processing section 64 increments Y1 by a predetermined value (S72) and moves to processing step S75.

Subsequently, the image processing section 64 updates the value of Y read out from the color two-dimensional bar code information arrays (Y, Cb, Cr) to Y1 (S75) and determines if there is any dot that has not been read out for Y1, Cb1, Cr1 from the color two-dimensional bar code information array (Y, Cb, Cr) (S80). If there is a dot that has not been read out (S80, Yes), the image processing section 64 returns to the processing step S47. If, on the other hand, there is not any dot that has not been read out (S80, No), the image processing section 64 executes a two-dimensional bar code decoding process similar to the decoding process for a monochromatic two-dimensional bar code (S81), using the value of Y in the color two-dimensional bar code information arrays corrected in the above-described flows and stores the obtained information in the memory section 65 or displays it on the display section 66.

While this embodiment is described above in terms of transmission of a two-dimensional bar code as television broadcasting, the two-dimensional bar code may alternatively be transmitted by way of a wired transmission path.

The color two-dimensional bar code may be printed by means of the transmission luminance signal Y, the transmission blue color difference signal Cb and the transmission red color difference signal Cr and the printed bar code may be picked up by the portable information terminal.

### Industrial Applicability

As described above, according to the present invention, it is possible to utilize two-dimensional bar codes by means of television broadcasting and an information transmission system as described above. Then, it is possible to remarkably reduce the error rate that arises when reading a two-dimensional bar code being displayed on a television receiving set that shows a resolution lower than that of a printed matter by means of a portable information terminal having a camera.

Additionally, the image of a color two-dimensional bar code to be transmitted is compatible with an image of a conventional monochromatic two-dimensional bar code and can be decoded by a portable information terminal adapted to decode a conventional monochromatic two-dimensional bar code.

Finally, when a color image of a two-dimensional bar code of the above-described embodiment is printed in color, it is possible to reduce the reading error rate even if it is printed on a sheet of low quality paper showing a low resolution if compared with a conventional two-dimensional bar code.

## Claims

1. A two-dimensional bar code image generation apparatus for generating a color image according to a two-dimensional bar code, the apparatus comprising:
a two-dimensional bar code encoding section that encodes the input information into a two-dimensional bar code;
an up-sampling section that up-samples the two-dimensional bar code;
a luminance signal generating section that applies a band limit to the output of the up-sampling section and outputs the band-limited output as luminance signal; and
a color difference signal generating section that outputs the quantity of variance between any two adjacent pieces of information as color difference signal in the output of the up-sampling section.

2. The apparatus according to claim 1, wherein,
when each dot having the value before the up-sampling is defined as an information dot and the dot located at the middle point of any two adjacent information dots is defined as a center dot, while the dot located between an information dot and a center dot is defined as an interval dot in the output of the up-sampling section;
the luminance signal generating section limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

3. The apparatus according to claim 1, wherein,
when the value of each dot is expressed by a value between 0 and 1 and each dot having the value before the up-sampling is defined as an information dot, while the dot located at the middle point of any two adjacent information dots and the dot located between an information dot and a center dot are defined respectively as a center dot and an interval dot and a blue color difference signal and a red color difference signal are selected as the color difference signal, in the output of the up-sampling section;
the color difference signal generating section defines the value of either of the blue color difference signal and the red color difference signal at each center dot to be equal to 1 when the values of the adjacent information dots differ from each other but equal to 0 when the values of the adjacent information dots agree with each other and the value of the other of the blue color difference signal and the red color difference signal at the center dot to be equal to 0 when the values of the adjacent information dots differ from each other but equal to 1 when the values of the adjacent information dots agree with each other, and the values of the blue color difference signal and red color difference signal at the information dot to be equal to 0, while it selects the value obtained by interpolating the value of the closest information dot and the value of the center dot as the value of the blue color difference signal and the red color difference signal of the interval dot.

4. The apparatus according to claim 3, wherein
the luminance signal generating section limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

5. A two-dimensional bar code decoding apparatus for picking up a color image containing a two-dimensional bar code and decoding the information contained in the two-dimensional bar code, the apparatus comprising:
a camera that picks up a color image containing the two-dimensional bar code; and
an image processing section that acquires the luminance signals and the color difference signals from the color image and also acquires the quantity of variance between any two adjacent pieces of information from the color difference signal so as to decode the two-dimensional bar code from the luminance signals, corrected by using the quantities of variances.

6. The apparatus according to claim 5, further comprising:
a display section that displays the information acquired as a result of decoding.

7. The apparatus according to claim 5, wherein
the color difference signal is a blue color difference signal and a red color difference signal; and
the image processing section selects, within the range corresponding to the unit of information of the two-dimensional bar code, the average value of the luminance signals, that of the blue color difference signals and that of the red color difference signals respectively as average luminance signal, average blue color difference signal and average red color difference signal and acquires the quantity of variance between any two adjacent pieces of information from the average color difference signal so as to decode the two-dimensional bar code from the average luminance signal corrected by using the quantities of variances.

8. The apparatus according to claim 5, wherein
it is arranged in a portable information terminal.

9. An information transmission system for generating a color image on the basis of a two-dimensional bar code and transmitting it at the transmitter side and reading the two-dimensional bar code by shooting the color image displayed at the receiver side, the system comprising:
a two-dimensional bar code image generation apparatus that includes:
a two-dimensional bar code encoding section that encodes the input information into a two-dimensional bar code;
an up-sampling section that up-samples the two-dimensional bar code;
a luminance signal generating section that applies a band limit to the output of the up-sampling section and outputs the band-limited output as luminance signal; and
a color difference signal generating section that outputs the quantity of variance between any two adjacent pieces of information as color difference signal in the output of the up-sampling section;
a display apparatus that displays the output of the two-dimensional bar code image generation apparatus; and
a two-dimensional bar code decoding apparatus including:
a camera that picks up the color image being displayed on the display apparatus and containing the two-dimensional bar code; and
an image processing section that acquires the luminance signals and the color difference signals from the color image and also acquires the quantity of variance between any two adjacent pieces of information from the color difference signal so as to decode the two-dimensional bar code from the luminance signals corrected by using the quantities of variances.

10. A two-dimensional bar code image generation method for generating a color image according to a two-dimensional bar code, the method comprising:
a two-dimensional bar code encoding step that encodes the input information into a two-dimensional bar code;
an up-sampling step that up-samples the two-dimensional bar code;
a luminance signal generating step that applies a band limit to the output of the up-sampling step and outputs the band-limited output as luminance signal; and
a color difference signal generating step that outputs the quantity of variance between any two adjacent pieces of information as color difference signal in the output of the up-sampling step.

11. The method according to claim 10, wherein,
when each dot having the value before the up-sampling is defined as an information dot and the dot located at the middle point of any two adjacent information dots is defined as a center dot, while the dot located between an information dot and a center dot is defined as an interval dot in the output of the up-sampling step;
the luminance signal generating step limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

12. The method according to claim 10, wherein,
when the value of each dot is expressed by a value between 0 and 1 and each dot having the value before the up-sampling is defined as an information dot, while the dot located at the middle point of any two adjacent information dots and the dot located between an information dot and a center dot are defined respectively as a center dot and an interval dot and a blue color difference signal and a red color difference signal are selected as the color difference signal, in the output of the up-sampling step; the color difference signal generating step defines the value of either of the blue color difference signal and the red color difference signal at each center dot to be equal to 1 when the values of the adjacent information dots differ from each other but equal to 0 when the values of the adjacent information dots agree with each other and the value of the other of the blue color difference signal and the red color difference signal at the center dot to be equal to 0 when the values of the adjacent information dots differ from each other but equal to 1 when the values of the adjacent information dots agree with each other, and the values of the blue color difference signal and red color difference signal at the information dot to be equal to 0, while it selects the value obtained by interpolating the value of the closest information dot and the value of the center dot as the value of the blue color difference signal and the red color difference signal of the interval dot.

13. The method according to claim 12, wherein
the luminance signal generating step limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

14. A two-dimensional bar code decoding method for picking up a color image containing a two-dimensional bar code and decoding the information contained in the two-dimensional bar code, the method comprising:
an image pickup step that picks up a color image containing the two-dimensional bar code; and
an image processing step that acquires the luminance signals and the color difference signals from the color image and also acquires the quantity of variance between any two adjacent pieces of information from the color difference signal so as to decode the two-dimensional bar code from the luminance signals, corrected by using the quantities of variances.

15. The method according to claim 14, wherein
the color difference signal is a blue color difference signal and a red color difference signal; and
the image processing step selects, within the range corresponding to the unit of information of the two-dimensional bar code, the average value of the luminance signals, that of the blue color difference signals and that of the red color difference signals respectively as average luminance signal, average blue color difference signal and average red color difference signal and acquires the quantity of variance between any two adjacent pieces of information from the average color difference signal so as to decode the two-dimensional bar code from the average luminance signal corrected by using the quantities of variances.

16. An information transmission method for generating a color image on the basis of a two-dimensional bar code and transmitting it at the transmission side and reading out the two-dimensional bar code by picking up a color image being displayed at the reaction side, the method comprising:
a two-dimensional bar code generating step for generating a two-dimensional bar code image to be transmitted, the step including:
a two-dimensional bar code encoding step that encodes the input information into a two-dimensional bar code;
an up-sampling step that up-samples the two-dimensional bar code;
a luminance signal generating step that applies a band limit to the output of the up-sampling step and outputs the band-limited output as luminance signal; and
a color difference signal generating step that outputs the quantity of variance between any two adjacent pieces of information as color difference signal in the output of the up-sampling step;
a display step that receives and displays the transmitted two-dimensional bar code image; and
a two-dimensional bar code decoding step including:
an image pickup step that picks up the two-dimensional bar code image; and
an image processing step that acquires the luminance signals and the color difference signals from the color image and also acquires the quantity of variance between any two adjacent pieces of information from the color difference signal so as to decode the two-dimensional bar code from the luminance signals corrected by using the quantities of variances.

17. A two-dimensional bar code image generation program for causing a computer to execute a two-dimensional bar code image generation method for generating a color image according to a two-dimensional bar code, the program comprising:
a two-dimensional bar code encoding step that encodes the input information into a two-dimensional bar code;
an up-sampling step that up-samples the two-dimensional bar code;
a luminance signal generating step that applies a band limit to the output of the up-sampling step and outputs the band-limited output as luminance signal; and
a color difference signal generating step that outputs the quantity of variance between any two adjacent pieces of information as color difference signal in the output of the up-sampling step.

18. The program according to claim 17, wherein,
when each dot having the value before the up-sampling is defined as an information dot and the dot located at the middle point of any two adjacent information dots is defined as a center dot, while the dot located between an information dot and a center dot is defined as an interval dot in the output of the up-sampling step;
the luminance signal generating step limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

19. The program according to claim 17, wherein,
when the value of each dot is expressed by a value between 0 and 1 and each dot having the value before the up-sampling is defined as an information dot, while the dot located at the middle point of any two adjacent information dots and the dot located between an information dot and a center dot are defined respectively as a center dot and an interval dot and a blue color difference signal and a red color difference signal are selected as the color difference signal, in the output of the up-sampling step;
the color difference signal generating step defines the value of either of the blue color difference signal and the red color difference signal at each center dot to be equal to 1 when the values of the adjacent information dots differ from each other but equal to 0 when the values of the adjacent information dots agree with each other and the value of the other of the blue color difference signal and the red color difference signal at the center dot to be equal to 0 when the values of the adjacent information dots differ from each other but equal to 1 when the values of the adjacent information dots agree with each other, and the values of the blue color difference signal and red color difference signal at the information dot to be equal to 0, while it selects the value obtained by interpolating the value of the closest information dot and the value of the center dot as the value of the blue color difference signal and the red color difference signal of the interval dot.

20. The method according to claim 19, wherein
the luminance signal generating step limits the band by selecting the value of the luminance signal of each center dot as the median of the range that the luminance signal can take and the value obtained by interpolating the value of the luminance signal at the closest information dot and the value of the luminance signal at the closest center dot is selected as the value of the luminance signal of the interval dot.

21. A two-dimensional bar code decoding program for causing a computer to execute a two-dimensional bar code decoding method for picking up an image of a two-dimensional bar code and decoding the information contained in the two-dimensional bar code, the method comprising:
an image pickup step that picks up a color image containing the two-dimensional bar code; and
an image processing step that acquires the luminance signals and the color difference signals from the color image and also acquires the quantity of variance between any two adjacent pieces of information from the color difference signal so as to decode the two-dimensional bar code from the luminance signals corrected by using the quantities of variances.

22. The program according to claim 21, wherein
the color difference signal is a blue color difference signal and a red color difference signal; and
the image processing step selects the average value of the luminance signals, that of the blue color difference signals and that of the red color difference signals respectively as average luminance signal, average blue color difference signal and average red color difference signal and acquires the quantity of variance between any two adjacent pieces of information from the average color difference signal so as to decode the two-dimensional bar code from the average luminance signal corrected by using the quantities of variances.
